# DEMANDE DE BREVET EUROPEEN

(11) **EP 1 422 606 A1**
(43) Date de publication de la demande: **26.05.2004**
(21) Numéro de dépôt: 02406002.2
(22) Date de dépôt: 20.11.2002
(51) Int. Cl.: G06F 3/06, G06F 13/38

(54) **Dispositif amovible et portable de support de données**

(71) Demandeur: Maffini, Patrice, 1400 Cheseaux-Noréaz (CH)
(72) Inventeur: Jakob, Eric, 1400 Yverdon-les Bains (CH); Maffini, Patrice, 1350 Orbe (CH)
(74) Mandataire: Wenger, Joel-Théophile

(57) **Abrégé**

Le but de la présente invention est disposer d'un module amovible, compact, porteur de données qui ne nécessite pas d'appareil hôte pour dialoguer avec un autre dispositif.

Ce but est atteint par un dispositif compact et portable comprenant une mémoire non volatile, ce dispositif comprenant des premiers moyens de communication avec un appareil hôte, des moyens de gestion de la mémoire et de la communication caractérisé en ce qu'il comprend des seconds moyens de communication autonomes pour transférer tout ou partie du contenu de la mémoire .

## Description

La présente demande concerne le domaine des dispositifs de stockage portables, en particulier des dispositifs compacts à mémoire à semiconducteurs.

Dans cette famille, l'on trouve sur le marché de nombreux produits sous des formes très variées telles que des cartes PCMCIA, des modules sans contact, des cartes à puces de type ISO 7816 ou des modules avec interfaces USB. On les utilise couramment dans des appareils de photo numérique, des lecteurs de musique au format MP3 ou comme porteur sécurisé de clés électroniques pour l'accès à des données protégées.

Tous ces modules ont en commun le fait qu'ils disposent d'une interface vers un appareil hôte et d'une mémoire pour stocker les données.

La connexion vers l'appareil hôte est amovible afin qu'ils puissent se connecter sur plusieurs appareils et ainsi transmettre des données d'un appareil à un autre.

Ces dispositifs n'ont en général pas d'alimentation interne car pour stocker des données, il n'est pas nécessaire de disposer d'une telle alimentation. Hors de leur connexion avec l'appareil hôte, ils sont complètement passifs.

Un exemple de réalisation est décrit dans le document US 6'148'354. Cette réalisation est basée sur un contrôleur de bus USB qui est également en charge de la gestion de la mémoire. Selon cet exemple, de la mémoire Flash est utilisée pour le stockage de données ce qui est une solution largement répandue lorsqu'il s'agit de disposer de grande capacité de stockage sous forme silicium.

Ceci présente l'avantage d'être fiable et toujours prêt lorsque l'on souhaite les utiliser mais présente l'inconvénient d'être dépendant d'un appareil hôte pour toutes les opérations visant les données stockées.

Le but de la présente invention est disposer d'un module amovible porteur de données qui ne nécessite pas d'appareil hôte pour dialoguer avec un autre dispositif.

Ce but est atteint par un dispositif compact et portable comprenant une mémoire non volatile, ce dispositif comprenant des premiers moyens de communication avec un appareil hôte, des moyens de gestion de la mémoire et de la communication caractérisé en ce qu'il comprend des seconds moyens de communication autonomes pour transférer tout ou partie du contenu de la mémoire .

Ainsi, selon l'invention, les seconds moyens de communication servent à la communication avec d'autres appareils, qu'ils soient portables ou fixes, sans la présence de l'appareil hôte.

Cette caractéristique ouvre la voie à de nombreuses applications telles que l'échange de données ente deux dispositifs portables ou avec une autre appareil.

La caractère autonome des seconds moyens de communication signifie qu'ils peuvent être activés sans l'appareil hôte et offre des possibilités de sélection des données d'une manière indépendante. En effet, le dispositif de l'invention dispose de moyens de commande destinés à commander les opérations effectuées par ces seconds moyens. Ces opérations se composent de l'identification du porteur du dispositif, de l'affichage des données à transférer, et de vérification du fonctionnement du dispositif. D'autres opérations complémentaires comme l'effacement des données sont également prévues.

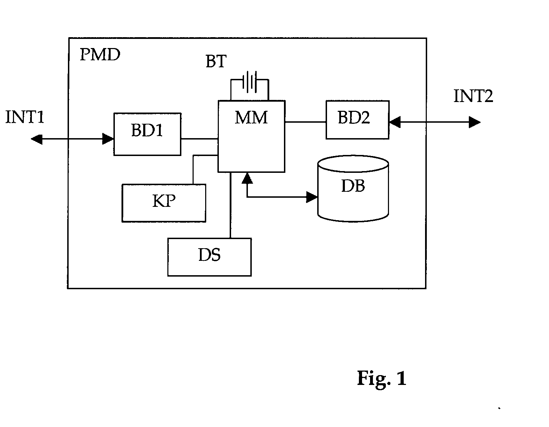

L'invention sera mieux comprise grâce à la description détaillée qui va suivre et qui se réfère à la figure unique qui est donnée à titre d'exemple nullement limitatif, et qui illustre schématique le dispositif de l'invention.

Le dispositif PMD comprend une mémoire DB qui est de préférence de type Flash. Des capacités de plusieurs centaines de Mega Bytes sont aujourd'hui disponibles.

Cette mémoire sera avantageusement organisée selon une structure de fichiers, ces fichiers pouvant être de type fort différents. On trouvera des fichiers de type audio (MP3), des images (JPEG, GIFF, BMP, TIF), des vidéos (MPEG), du texte (Word, WP, TXT) ou des fichiers mixtes (PDF, EPS).

En charge de la gestion de cette mémoire, le module MM effectue toutes les procédures de lecture/écriture de cette mémoire. Ce module gère également les phases transitoires d'enclenchement et déclenchement du dispositif PMD.

Ce module gère également les nouvelles fonctions de l'invention, à savoir l'activation des seconds moyens de communication INT2. Pour cela, il est relié à une série de touches KP permettant à un utilisateur de piloter les différentes fonctions d'échanges de données.

Ces touches peuvent prendre différentes formes telles qu'un commutateur rotatif, des flèches de sélection ou toute forme d'introduction manuelle de commandes. Ces commandes sont utilisées pour la sélection des fichiers à transférer d'un dispositif sur un autre.

Une des particularités du dispositif est de disposer d'une alimentation autonome BT pour activer les seconds moyens de communications INT2. Pour la sélection des commandes, le dispositif PMD dispose d'un module d'affichage DS qui peut prendre la forme d'un écran alphanumérique, un simple écran numérique, voire un indicateur (des LED) sur des fonctions pré imprimées. Les commandes introduites par le module KP sont confirmées par le module d'affichage DS. On sélectionne un mode lecture grâce aux touches et l'affichage indiquera que le dispositif est en mode lecture. Le module affichage DS permet également d'indiquer le contenu de la mémoire DB.

Cette alimentation autonome BT sera de préférence une batterie rechargeable et l'on profitera de la connexion avec l'appareil hôte pour recharger la batterie.

Ce dispositif PMD dispose d'un premier moyen de communication INT1 de préférence de type USB. Cette interface série présente l'avantage d'être présent sur un grand nombre d'appareils tels que les ordinateurs, les lecteurs MP3, les appareils photos numériques.

Dans une forme de réalisation, l'interface des premiers moyens de communication INT1 est également utilisé par les seconds moyens de communication. Ceci est par exemple le cas pour un dispositif disposant d'une interface USB pour les deux moyens. Dans ce cas, pour se connecter avec un autre dispositif selon l'invention ou un dispositif passif, il faut utiliser un convertisseur de polarité de prises afin de connecter deux dispositif ayant initialement la même prise. On utilisera avantageusement le capuchon recouvrant le dispositif pour loger deux prises mâles afin de permettre la connexion d'un autre dispositif ayant une prise femelle.

Les données peuvent ainsi facilement remplir la mémoire DB avec des images, de la musiques ou des données.

Lorsque le dispositif PMD est séparé de l'appareil hôte, il est possible d'activer des seconds moyens de communication INT2 grâce à l'alimentation autonome BT.

Ces seconds moyens peuvent être de différentes natures. Selon une première réalisation ces moyens sont de type sans contact tels que Blue Tooth, Infrarouge IRDA, ou UWB (Ultra Wide Band). Ainsi, si un même dispositif est placé à proximité, ces deux dispositifs pourront échanger des informations par cette voie.

Il est certain que la consommation électrique étant un problème important, un protocole peut gourmand sera utilisé de préférence, par exemple en n'activant les moyens de réception que sur commande de l'utilisateur.

D'autres types d'interfaces sont prévus dans le cadre de la présente invention, telle qu'une interface USB. Dans ce cas, le dispositif PMD aura la capacité de prendre le statut de maître alors qu'en temps normal, cette capacité est réservée à l'appareil hôte.

Le dispositif de l'invention, bien que compact et portable, dispose grâce à ses seconds moyens de communication, de la possibilité de fonctionner comme appareil hôte vis-à-vis d'un autre dispositif portable conventionnel. Le dispositif de l'invention va alimenter ce dispositif passif et fonctionner comme s'il était l'appareil hôte. Grâce à cette caractéristique, le dispositif de l'invention n'est pas seulement intéressant avec des dispositif du même type mais ouvre des possibilités d'échanges nouvelles avec des dispositifs passifs.

## Revendications

1. Dispositif compact et portable (PMD) comprenant une mémoire (DB) non volatile, ce dispositif comprenant des premiers moyens de communication (INT1) avec un appareil hôte, des moyens de gestion de la mémoire et de la communication (MM) **caractérisé en ce qu'**il comprend des seconds moyens de communication autonomes pour transférer tout ou partie du contenu de la mémoire (DB).

2. Dispositif selon la revendication 1, **caractérisé en ce que** les seconds moyens (INT2) sont de type sans contact.

3. Dispositif selon les revendications 1 et 2, **caractérisé en ce que** ces seconds moyens sont de type hertziens tels que Blue Tooth ou UWB, ou de type infrarouge tel que IRDA.

4. Dispositif selon les revendications 1 à 3, **caractérisé en ce qu'**il comprend une alimentation autonome (BT).

5. Dispositif selon la revendication 4, **caractérisé en ce que** l'alimentation autonome est de type rechargeable et que la recharge est assurée par l'appareil hôte.

6. Dispositif selon les revendications 1 à 5, **caractérisé en ce qu'**il comprend des moyens pour initier une communication.

7. Dispositif selon les revendications 1 à 6, **caractérisé en ce qu'**il comprend un affichage (DS).

8. Dispositif selon l'une des revendications précédentes, **caractérisé en ce qu'**il comprend des moyens de commandes manuelles (KP).

9. Dispositif selon l'une des revendications précédentes, **caractérisé en ce que** la mémoire est organisée selon une structure de fichiers.
